(19) Europäisches Patentamt
European Patent Office
Office européen des brevets

(11) **EP 2 754 237 B1**

(12) **EUROPÄISCHE PATENTSCHRIFT**

(45) Veröffentlichungstag und Bekanntmachung des Hinweises auf die Patenterteilung:
**08.05.2019   Patentblatt 2019/19**

(21) Anmeldenummer: **12753485.7**

(22) Anmeldetag: **31.08.2012**

(51) Int Cl.:
**H02P 6/10** *(2006.01)*

(86) Internationale Anmeldenummer:
**PCT/EP2012/067010**

(87) Internationale Veröffentlichungsnummer:
**WO 2013/034503 (14.03.2013 Gazette 2013/11)**

(54) **ELEKTRONISCH KOMMUTIERTER ELEKTROMOTOR**

ELECTRONICALLY COMMUTATED ELECTRIC MOTOR

MOTEUR ÉLECTRIQUE À COMMUTATION ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2011   DE 102011082141**

(43) Veröffentlichungstag der Anmeldung:
**16.07.2014   Patentblatt 2014/29**

(73) Patentinhaber: **Robert Bosch GmbH
70442 Stuttgart (DE)**

(72) Erfinder:
• **HALLOR, Mattias
71706 Markgroeningen (DE)**
• **VOLLMER, Ulrich
73235 Weilheim (DE)**

(56) Entgegenhaltungen:
**DE-A1-102010 001 241**

**Beschreibung**

Stand der Technik

Die Erfindung betrifft einen elektronisch kommutierten Elektromotor. Der Elektromotor weist bevorzugt einen Stator und einen insbesondere permanentmagnetisch ausgebildeten Rotor auf. Der elektronisch kommutierte Elektromotor weist eine bevorzugt mit dem Stator verbundene Leistungsendstufe, und eine mit der Leistungsendstufe verbundene Verarbeitungseinheit auf. Die Verarbeitungseinheit ist ausgebildet, die Leistungsendstufe insbesondere pulsweitenmoduliert zum Erzeugen wenigstens eines Statorstromes, insbesondere durch Erzeugen wenigstens einer oder mehrerer Wechselspannungen, anzusteuern. Die Leistungsendstufe ist bevorzugt ausgangsseitig mit dem Stator verbunden. Die Verarbeitungseinheit kann so die Leistungsendstufe zum Bestromen des Stators und zum Erzeugen eines magnetischen Drehfeldes mittels des Stators ansteuern.

Aus der DE 10 2010 001 241 ist ein elektronisch kommutierter Elektromotor bekannt, bei dem ein Stromsensor einen einen Defekt repräsentierenden Statorstrom erfassen kann und eine mit dem Stator verbundenene Leistungsendstufe mit einem in einem Speicher vorrätig gehaltenen Ansteuermuster ansteuern kann.

Offenbarung der Erfindung

Die Erfindung ist in den Ansprüchen 1 und 9 definiert.

Der Elektromotor weist einen mit der Verarbeitungseinheit verbundenen Stromsensor auf, welcher ausgebildet ist, den von der Leistungsendstufe erzeugten Statorstrom zu erfassen und ein den Statorstrom repräsentierendes Stromsignal zu erzeugen. Die Verarbeitungseinheit ist ausgebildet, mittels des Stromsensors wenigstens einen, oder nur einen Stromwert des Stromes zu einem Erfassungszeitpunkt innerhalb eines Zeitintervalls, insbesondere einer Pulsweitenmodulations-Periode, zu erfassen und wenigstens in Abhängigkeit von dem Stromwert, oder zusätzlich in Abhängigkeit einer Spannung und einer Impedanz umfassend eine Induktivität und/oder einen ohmschen Widerstand von Statorspulen des Stators, einen Stromverlauf des Stromes in dem Zeitintervall zu ermitteln und die Leistungsendstufe zum Bestromen des Stators in Abhängigkeit des ermittelten Stromverlaufes anzusteuern.

Mittels des zuvor erwähnten Stromsensors kann der Elektromotor der eingangs genannten Art vorteilhaft keine oder nur eine geringe Drehmomentwelligkeit aufweisen, wobei eine Drehmomentwelligkeit eine zeitliche Drehmomentschwankung, insbesondere zeitliche Amplitudenmodulation eines Drehmomentes darstellt. Die Drehmomentschwankung kommt insbesondere durch eine ungenaue Ansteuerung der Statorspulen des Stators durch die Verarbeitungseinheit zustande. Die ungenaue Ansteuerung wird beispielsweise durch einen nicht exakt ermittelten Ist-Stromwert eines Bestromungszustandes des Stators bewirkt.

Mittels des so ausgebildeten Elektromotors mit reduzierter oder keiner Drehmomentwelligkeit kann der Elektromotor über mit der Motorwelle des Elektromotors verbundene Teile auch keinen Luftschall mit einer Frequenz der Drehmomentwelligkeit abstrahlen. Der Elektromotor mit dem so ausgebildeten Stromsensor strahlt beim Betrieb somit auch weniger Luftschall ab und führt so zu geringeren Geräuschemissionen. Weiter vorteilhaft wird durch den so ausgebildeten Elektromotor eine verbesserte Haptik bei einer Servolenkung, die mit dem Elektromotor verbunden ist, bewirkt.

Bevorzugt ist die Verarbeitungseinheit ausgebildet, aus dem Stromverlauf einen Mittelwert des Stromes in dem Zeitintervall aus während Zeitabschnitten des Zeitintervalls ermittelten Strömen zu bilden. Die Verarbeitungseinheit ist weiter ausgebildet, die Leistungsendstufe in Abhängigkeit des Mittelwerts anzusteuern. Dabei ist eine von der Leistungsendstufe auf den Stator geschaltete Spannung während des Zeitabschnitts bevorzugt konstant.

Mittels der Mittelwertbildung kann ein Erfassungs- und Verarbeitungsaufwand für die Stromerfassung vorteilhaft klein gehalten werden, sodass eine Rechenkapazität der Verarbeitungseinheit noch für weitere Verarbeitungsaufgaben übrig bleibt.

In einer bevorzugten Ausführungsform ist die Verarbeitungseinheit ausgebildet, eine während eines Zeitabschnitts fließende elektrische Ladung zu ermitteln und den Mittelwert des Stromes in Abhängigkeit einer Summe der während des Zeitabschnitts in dem Zeitintervall fließenden Ladungen zu ermitteln. Dadurch kann der Mittelwert des Stromes vorteilhaft genau ermittelt werden.

In einer bevorzugten Ausführungsform des Elektromotors entspricht die Anzahl der Zeitabschnitte einer Anzahl von möglichen, zueinander verschiedenen Schaltzuständen einer auf die Statorspulen des Stators geschalteten Spannung. Beispielsweise kann jede Statorspule zwei Schaltzustände annehmen, beispielsweise einen Schaltzustand, bei dem eine Zwischenkreisspannung auf die Statorspule beaufschlagt ist, und ein weiterer Schaltzustand, bei dem keine Spannung auf die Statorspule beaufschlagt ist. Mittels der Mittelwertbildung für die Zeitabschnitte von zueinander möglichen verschiedenen Schaltzuständen wird vorteilhaft die Zahl der zur Mittelwertbildung herangezogenen Stromwerte, insbesondere die Zahl der fließenden Ladungsmengen zum Erzeugen einer hohen Mittelwertsgenauigkeit gebildet.

In einer bevorzugten Ausführungsform weist der Elektromotor einen mit der Verarbeitungseinheit verbundenen Temperatursensor auf. Der Temperatursensor ist ausgebildet, eine Temperatur wenigstens eines Teils des Elektromotors, insbesondere des Stators und/oder der Leistungsendstufe zu erfassen, und ein die Temperatur repräsentierendes Temperatursignal zu erzeugen. Die Verarbeitungseinheit ist bevorzugt ausgebildet, den Stromwert zum Ermitteln des Stromverlaufes in Abhängigkeit des Temperatursignals, bevorzugt in Abhängigkeit einer eine Temperaturänderung repräsentierenden Änderung des Temperatursignals, zu erfassen. Weiter bevorzugt wird ein neuer Strommittelwert zum Ansteuern der Leistungsendstufe und somit zum Bestromen des Stators vorteilhaft nur dann durchgeführt, wenn eine Temperaturänderung, insbesondere eine vorbestimmte Temperaturänderung, repräsentiert durch das Temperatursignal, vorliegt. Durch die temperaturabhängige Erfassung eines Stromwertes, aus dem nach dem Erfassen für ein vorbestimmtes Zeitintervall ein Mittelwert für zueinander verschiedene Zeitabschnitte gebildet wird, kann die Rechenbelastung der Verarbeitungseinheit vorteilhaft möglichst gering gehalten werden.

Es wurde nämlich erkannt, dass die elektrischen Eigenschaften der Statorspulen, weiter die elektrischen Eigenschaften der Leistungsendstufe von einer Umgebungstemperatur des Stators oder der Leistungsendstufe abhängen. Mit den elektrischen Eigenschaften ändert sich auch eine Impedanz des Stators oder der in der Leistungsendstufe enthaltenen Halbleiterbauelemente. Der zeitliche Verlauf des von dem Elektromotor abgegebenen Drehmoments, insbesondere eine mögliche Drehmomentwelligkeit des Drehmoments, hängt somit wesentlich von einer Temperatur des Stators und/oder der Leistungsendstufe ab.

In einer bevorzugten Ausführungsform ist der Stromsensor durch einen Widerstand, insbesondere einen Shunt-Widerstand gebildet. Der Widerstand ist mit der Leistungsendstufe insbesondere seriell verbunden.

Bei einem Verfahren zum Betreiben eines elektronisch kommutierten Elektromotors werden Statorspulen eines Elektromotors zum Erzeugen eines magnetischen Drehfeldes pulsweitenmoduliert mit einer Spannung beschaltet. Bei dem Verfahren wird ein Stromwert eines durch die Statorspulen fließenden Stromes zu einem Erfassungszeitpunkt in einem Zeitintervall erfasst und ein Stromverlauf des Stromes in dem Zeitintervall ermittelt und die Statorspulen in Abhängigkeit des ermittelten Stromverlaufes beschaltet.

In einer bevorzugten Ausführungsform des Verfahrens wird aus dem Stromverlauf ein Mittelwert des Stromes in dem Zeitintervall aus während Zeitabschnitten des Zeitintervalls ermittelten Strömen gebildet und die Statorspulen in Abhängigkeit des Mittelwerts angesteuert, wobei Schaltzustände der Statorspulen während des Zeitabschnitts jeweils unverändert sind. Dadurch ist eine jeweils auf eine Statorspule geschaltete Spannung während des Zeitabschnitts unverändert. Bevorzugt wird bei dem Verfahren eine während eines Zeitabschnitts fließende elektrische Ladung zu ermittelt und der Mittelwert des Stromes in Abhängigkeit einer Summe der während der Zeitabschnitte in dem Zeitintervall fließenden Ladungen ermittelt.

Bevorzugt wird eine Temperatur wenigstens eines Teils des Elektromotors, insbesondere einer Leistungsendstufe und/oder eines Stators erfasst und ein die Temperatur repräsentierendes Temperatursignal erzeugt. Weiter wird der Stromwert zum Ermitteln des Stromverlaufes in Abhängigkeit des Temperatursignals, insbesondere einer eine Temperaturänderung repräsentierende Änderung des Temperatursignals erfasst.

Die Erfindung wird nun im Folgenden anhand von Figuren und weiteren Ausführungsbeispielen beschrieben. Weitere vorteilhafte Ausführungsvarianten ergeben sich aus den in den Figuren beschriebenen, und in den abhängigen Ansprüchen beschriebenen Merkmalen.

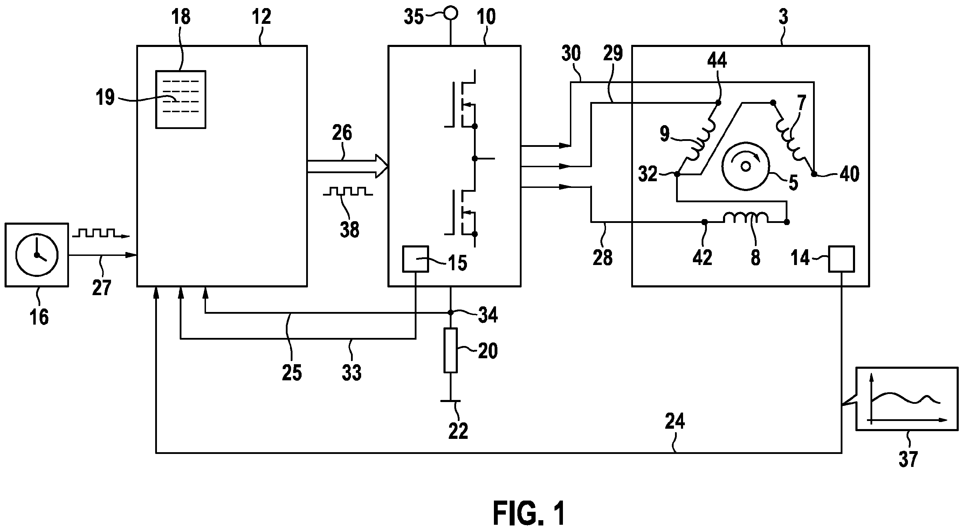

Figur 1 zeigt ein Ausführungsbeispiel für einen Elektromotor 1. Der Elektromotor 1 weist einen Stator 3 und einen permanentmagnetisch ausgebildeten Rotor 5 auf. Der Elektromotor 1 weist auch eine Leistungsendstufe 10 auf, welche ausgangsseitig mit dem Stator 5 und dort mit Statorspulen 7, 8, und 9 des Stators 3 verbunden sind. Die Leistungsendstufe 10 weist einen Anschluss 35 für eine Zwischenkreisspannung auf. Die Leistungsendstufe 10 ist über einen Verbindungsknoten 34 über einen Shunt-Widerstand 20 mit einem Masseanschluss 22 verbunden. Der Shunt-Widerstand 20 bildet ein Stromerfassungselement. Die Verarbeitungseinheit 12 ist über eine insbesondere mehrkanalig ausgebildete Verbindung 26 mit der Leistungsendstufe 10 verbunden und ausgebildet, die Leistungsendstufe 10, insbesondere Steueranschlüsse von Halbleiterschaltern der Leistungsendstufe 10, zum Bestromen des Stators 3 und so zum Erzeugen eines magnetischen Drehfeldes zum Drehbewegen des Rotors 5 pulsweitenmoduliert anzusteuern und dazu ein pulsweitenmoduliertes Steuersignal 38 zu erzeugen.

Die Halbleiterschalter sind beispielsweise jeweils durch einen IGBT-Transistor oder einen Feldeffekt-Transistor, insbesondere MOS-FET (MOS-FET = Metal-Oxide-Semiconductor-Field-Effect-Transistor) oder MIS-FET (MIS-FET = Metal-Insulated-Semiconductor-Field-Effect-Transistor) gebildet.

Die Verarbeitungseinheit 12 ist beispielsweise durch einen Mikroprozessor, einen Mikrocontroller, ein ASIC (ASIC = Application-Specific-Integrated-Circuit) oder ein FPGA (FPGA = Field-Programmable-Gate-Array) gebildet.

Der Verbindungsknoten 34 ist über eine Verbindungsleitung 25 mit der Verarbeitungseinheit 12 verbunden. Die Verarbeitungseinheit 12 kann über die Verbindungsleitung 25 ein Stromsignal empfangen, das eine über dem Shunt-Widerstand 20 abfallende Spannung und so einem durch die Leistungsendstufe 10 fließenden Strom repräsentiert. Die Verarbeitungseinheit 12 ist eingangsseitig über eine Verbindungsleitung 27 mit einem Zeitgeber 16 verbunden. Der Zeitgeber 16 ist beispielsweise durch einen Schwingquarz gebildet und ist ausgebildet, ein einen Zeittakt repräsentierendes Zeitsignal zu erzeugen und an die Verarbeitungseinheit 12 zu senden. Die Verarbeitungseinheit 12 ist mit einem Speicher 18 für Datensätze verbunden, von denen ein Datensatz 19 beispielhaft bezeichnet ist. Der Datensatz 19 repräsentiert in diesem Ausführungsbeispiel einen Stromwert zu einem Erfassungszeitpunkt, der von dem Shunt-Widerstand 20 als Stromsensor erfasst worden ist.

Die Leistungsendstufe 10 ist ausgangsseitig über eine Verbindungsleitung 30 mit einem ersten Anschluss 40 der Statorspule 7, über eine Verbindungsleitung 28 mit einem ersten Anschluss 42 der Statorspule 8 und über eine Verbindungsleitung 29 mit einem ersten Anschluss 44 der Statorspule 9 verbunden. Der Elektromotor 1 weist auch einen Temperatursensor 14 auf, welcher angeordnet und ausgebildet ist, eine Temperatur des Stators 3 zu erfassen und ein die Temperatur repräsentierendes Temperatursignal 37 zu erzeugen und dieses über eine Verbindungsleitung 24 an die Verarbeitungseinheit 12 zu senden. Der Elektromotor 1 weist auch einen Temperatursensor 15 auf, welcher angeordnet und ausgebildet ist, eine Temperatur der Leistungsendstufe 10 zu erfassen und ein die Temperatur der Leistungsendstufe 10 repräsentierendes Temperatursignal zu erzeugen und dieses über eine Verbindungsleitung 33 an die Verarbeitungseinheit 12 zu senden.

Die Verarbeitungseinheit 12 ist ausgebildet, in Abhängigkeit des Temperatursignals und des Zeitsignals innerhalb eines Zeitintervalls, insbesondere einer Pulsweitenmodulationsperiode, während eines Ansteuerns der Leistungsendstufe 10 aus dem von dem Shunt-Widerstand 20 empfangenen Stromsignal einen Stromwert zu einem Erfassungszeitpunkt zu bilden und den Datensatz 19 zu erzeugen, der den Stromwert repräsentiert.

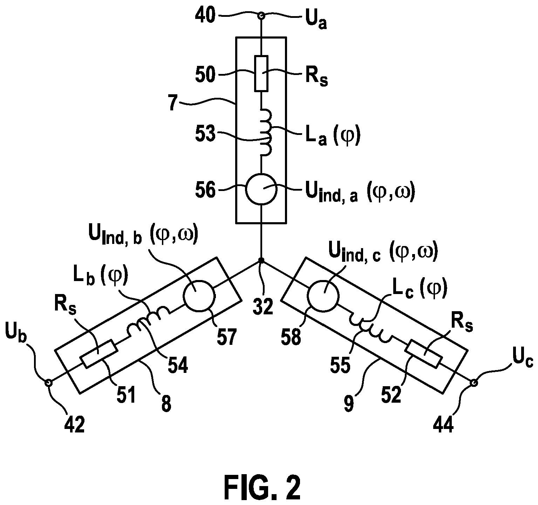

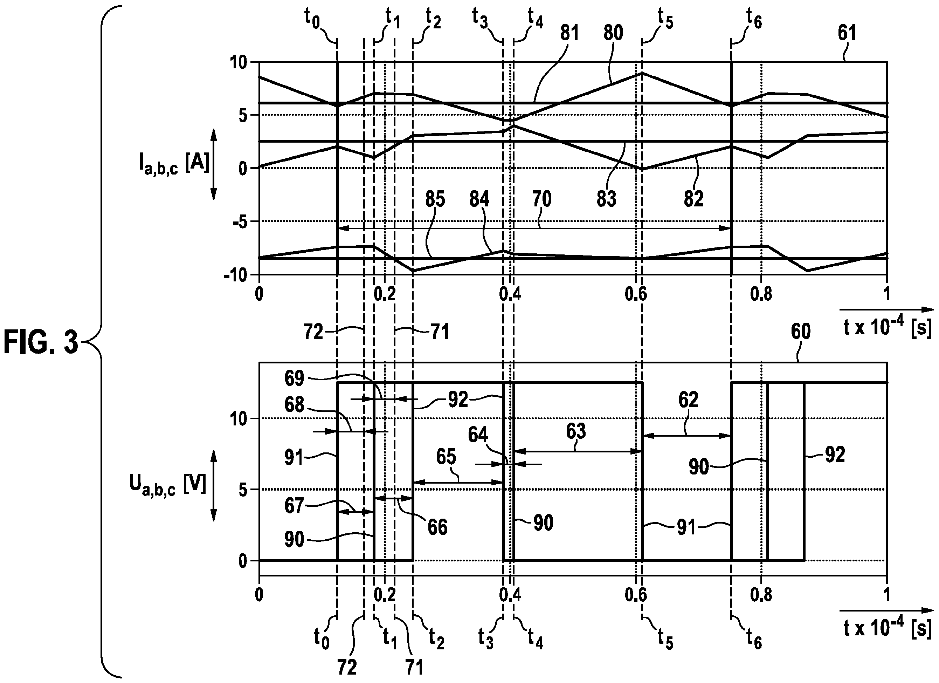

Die Verarbeitungseinheit 12 ist weiter ausgebildet, einen Stromverlauf des Stromes in dem Zeitintervall in Abhängigkeit des durch den Datensatz 19 repräsentierten Stromwertes zu ermitteln, einen Mittelwert des Stromes im Zeitintervall in Abhängigkeit des ermittelten Stromverlaufes zu ermitteln und die Leistungsendstufe 10 in Abhängigkeit des Stromwertes zum Bestromen des Stators 3 anzusteuern. Ein Ermittlungsbeispiel ist in den folgenden Figuren 2 und 3 beschrieben.

Die Verarbeitungseinheit ist beispielsweise ausgebildet, den Stator 3 zum Erzeugen des magnetischen Drehfeldes in Abhängigkeit des ermittelten Mittelwerts anzusteuern, so lange durch die Temperatursignale der Temperatursensoren 14 oder 15 keine Temperaturänderung erfasst worden ist. Im Falle einer erfassten Temperaturänderung kann die Verarbeitungseinheit 12 den Mittelwert des Stromes im Zeitintervall erneut ermitteln und eine weitere Ansteuerung der Leistungsendstufe 10 in Abhängigkeit des neu ermittelten Mittelwerts durchführen.

Figur 2 zeigt ein Ausführungsbeispiel einer Schaltungsanordnung eines Ersatzschaltbildes für einen Elektromotor mit drei Statorspulen. Jede Statorspule weist dabei eine Induktivität und einen ohmschen Widerstand auf, die mit einer Spannungsquelle in Serie geschaltet sind, wobei die Spannungsquelle eine in der Statorspule induzierte Spannung repräsentiert.

Ein erster Anschluss 40 der in Figur 1 dargestellten Statorspule 7 wird von der Leistungsendstufe 10 pulsweitenmoduliert mit einer Zwischenkreisspannung Ua beaufschlagt. Der Anschluss 40 ist über einen ohmschen Widerstand 50 der Statorspule 7 mit einer Induktivität 53 der Statorspule 7 verbunden, die über eine die in der Statorspule 7 induzierte Spannung repräsentierende Spannungsquelle 56 mit dem Sternpunktanschluss 32 verbunden ist. Ein erster Anschluss 42 der in Figur 1 dargestellten Statorspule 8 wird von der Leistungsendstufe 10 pulsweitenmoduliert mit einer Zwischenkreisspannung Ub beaufschlagt. Der Anschluss 42 ist über einen ohmschen Widerstand 51 der Statorspule 8 mit einer Induktivität 54 der Statorspule 8 verbunden, die über eine die in der Statorspule 8 induzierte Spannung repräsentierende Spannungsquelle 57 mit dem Sternpunktanschluss 32 verbunden ist. Ein erster Anschluss 44 der in Figur 1 dargestellten Statorspule 9 wird von der Leistungsendstufe 10 pulsweitenmoduliert mit einer Zwischenkreisspannung Uc beaufschlagt. Der Anschluss 44 ist über einen ohmschen Widerstand 52 der Statorspule 9 mit einer Induktivität 55 der Statorspule 9 verbunden, die über eine die in der Statorspule 9 induzierte Spannung repräsentierende Spannungsquelle 58 mit dem Sternpunktanschluss 32 verbunden ist.

Für den Anschluss 40 gilt:

$$U_a - U_Y = R_S \cdot I_a + L_a(\varphi)\frac{dI_a}{dt} + \frac{dL}{d\varphi}\omega \cdot I_a + U_{ind,a}(\varphi,\omega)$$ (1)

Eine Sternpunktspannung des Sternpunktes 32 entspricht näherungsweise, Oberwellen vernachlässigend, einem Mittelwert einer angelegten Zwischenkreisspannungen:

$$U_Y = \frac{U_a + U_b + U_c}{3}$$ (2)

Eine winkelabhängige Induktivität ist näherungsweise, Oberwellen vernachlässigend:

$$L_a(\varphi) = \frac{L_d + L_q}{2} + (L_d - L_q) \cdot \cos(2\varphi_{el}) \tag{3}$$

Die induzierte Spannung ist dann:

$$U_{ind,a}(\varphi, \omega) = -\Psi_{pm} \cdot \sin(\varphi_{el}) \tag{4}$$

Die in den Statorspulen des Stators induzierten Spannungen sind jeweils um 120 Grad zueinander phasenverschoben.
Vereinfachend wird angenommen, dass eine induzierte Spannung und eine Induktivität der Statorspulen über das Zeitintervall, insbesondere eine PWM-Periode hinweg konstant sind.
Für die Ermittlung des Spannungsabfalls am ohmschen Widerstand wird ein konstanter Phasenstrom im Zeitintervall angenommen.
Das Zeitintervall kann in zueinander verschiedene Zeitabschnitte unterteilt werden, in denen an den Anschlüssen der Statorspulen jeweils entweder die Zwischenkreisspannung oder keine Spannung anliegt.
Es wird für den Phasenstrom angenommen:

$$\frac{dI_a}{dt} = \frac{\Delta I_a}{\Delta t} \tag{5}$$

Für jeden Zeitabschnitt des Zeitintervalls kann dann eine Stromänderung ermittelt werden:

$$\Delta I_a = \frac{U_a - \frac{U_a + U_b + U_c}{3} - R_S \cdot I_a - U_{ind,a}(\varphi, \omega)}{L_a(\varphi)} \tag{6}$$

Darin bedeuten:

$U_Y$ = Sternpunktspannung am Verbindungsknoten 32;

$U_a$ = Spannung, insbesondere Zwischenkreisspannung, an Phase a, insbesondere Statorspule 7;

$I_a$ = Strom durch die Statorspule 7 in Phase a;

$R_s$ = ohmscher Widerstand 51, 52, oder 53 einer Statorspule der Statorspulen 7, 8 oder 9;

$L_a(\varphi)$= rotorwinkelabhängige Induktivität 53 der Statorspule 7;

$U_{ind, a}((\varphi, \omega)$ = vom Rotorwinkel $\varphi$ und einer Kreisfrequenz $\omega$ abhängige induzierte Spannung 56 in der Statorspule 7;

$\varphi_{el}$ = Rotorwinkelstellung elektrisch

$\psi_{pm}$ = Magnetischer Fluss der Pulsweitenmodulation;

$L_d$ = motorspezifische Induktivität in einem d-q-Koordinatensystem in d-Richtung;

$L_q$ = motorspezifische Induktivität in einem d-q-Koordinatensystem in q-Richtung.

Für die Anschlüsse 42 und 44, insbesondere die Motorphasen b und c gilt eine Gleichung analog zu Gleichung 1, mit Strom, Spannungen und Induktivität für die Phasen b und c.

Figur 3 zeigt ein Diagramm in dem die in den Statorspulen fließenden Ströme und die auf die Statorspulen geschalteten zeitlichen Spannungsverläufe dargestellt sind.

Die Statorspulen sind in den Zeitabschnitte des Zeitintervalls, insbesondere der Pulsweitenmodulationsperiode, wie folgt, beispielsweise von der Leistungsendstufe 10 in Figur 1, mit der Zwischenkreisspannung Uzk gemäß folgender Tabelle beaufschlagt:

| Zeitabschnitt | 1 | 2 | 3 | 4 | 5 | 6 |
|---|---|---|---|---|---|---|
| Ua = | 0 | Uzk | Uzk | Uzk | 0 | 0 |
| Ub = | Uzk | Uzk | Uzk | Uzk | Uzk | 0 |
| Uc = | 0 | 0 | Uzk | 0 | 0 | 0 |

Die Stromänderung kann für jeden der sechs Zeitabschnitte nach Gleichung (6) ermittelt werden.

Ein mittlerer Stromwert eines Stromes einer Statorspule in dem Zeitintervall ist:

$$I_{mean} = \frac{1}{t_{period}} \sum_{k=0}^{5} \frac{(I_k + I_{k+1}) \cdot (t_{k+1} - t_k)}{2} \quad (7)$$

$$I_0 = I_{measured} - \frac{\Delta I_1 \cdot t_{sample}}{t_1 - t_0}$$

$$I_{k+1} = I_k + \Delta I_{k+1}$$

Darin bedeuten:

$t_0 \dots t_6$ = Umschaltzeitpunkt der Pulsweitenmodulation der Leistungsendstufe;
$I_0 \dots I_6$ = Momentanstromwerte zu den Zeitpunkten $t_0 \dots t_6$;
$I_{measured}$ = erfasster Stromwert;
$I_{mean}$ = Mittelwert des Stromes im Zeitintervall;
$t_{period}$ = Zeitdauer des Zeitintervalls, insbesondere PWM-Periode;
$t_{sample}$ = Zeitpunkt an dem Imeasured erfasst wird;
$\Delta I_k$ = Stromänderung zwischen zwei aufeinanderfolgenden Zeitpunkten der Zeitpunkte $t_0 \dots t_6$ gemäß Gleichung (6).

Für die Phase b, am Beispiel der Figur 1 die Statorspule 8, kann die Verarbeitungseinheit 12 in Figur 1 die Ströme wie folgt ermitteln:

$$I_{b,mean} = \frac{1}{t_{period}} \sum_{k=0}^{5} \frac{(I_{b,k} + I_{b,k+1}) \cdot (t_{b,k+1} - t_{b,k})}{2} \quad (8)$$

Gleichung 8 repräsentiert somit eine Summe der in der Phase b, beispielsweise in der Statorspule 8, in den Zeitintervallen aufsummierten fließenden elektrischen Ladungen, geteilt durch die Zeitdauer des Zeitintervalls, woraus der mittlere Strom in der Phase b, beispielsweise der Statorspule 8, resultiert.

Der Strom in Phase b zum Zeitpunkt $t_0$ ist dann:

$$I_{b,0} = I_{b,measured} - \frac{\Delta I_{b,1} \cdot t_{b,sample}}{t_{b,1} - t_{b,0}} \qquad (9)$$

Der Strom in Phase b im folgenden Zeitabschnitt k+1 ist wie folgt:

$$I_{b,k+1} = I_{b,1} + \Delta I_{b,1}$$

Für die Phase c, beispielsweise für die Statorspule 9, gilt wie folgt:

$$I_{c,mean} = \frac{1}{t_{period}} \sum_{k=0}^{5} \frac{(I_{c,k} + I_{c,k+1}) \cdot (t_{c,k+1} - t_{c,k})}{2} \qquad (10)$$

$$I_{c,0} = I_{c,measured} - \frac{\Delta I_{c,2} \cdot t_{sample}}{t_{c,2} - t_{c,1}} \qquad (11)$$

$$I_{c,k+1} = I_{c,k} + \Delta I_{c,k+1}$$

Der Strom in Phase c zum Zeitpunkt $t_0$ ist wie folgt:

$$I_{c,0} = I_{c,1} + \Delta I_{c,1}$$

Im Diagramm 61 sind die von der Leistungsendstufe 10 auf den Stator 3 geschalteten pulsweitenmodulierten Spannungen dargestellt. Ein mittels Pulsweitenmodulation erzeugter Spannungsverlauf 90 entspricht einer auf den Anschluss 40 der Statorspule 7 beaufschlagten Zwischenkreisspannung Ua. Ein mittels Pulsweitenmodulation erzeugter Spannungsverlauf 91 entspricht einer auf den Anschluss 42 der Statorspule 8 beaufschlagten Zwischenkreisspannung Ub. Ein mittels Pulsweitenmodulation erzeugter Spannungsverlauf 92 entspricht einer auf den Anschluss 44 der Statorspule 9 beaufschlagten Zwischenkreisspannung Uc. Die Zeitpunkte der Umschaltung der Leistungsendstufe, durch die die vorab erwähnten Zeitabschnitte des Zeitintervalls 70 bestimmt sind, sind mit t0, t1, t2, t3, t4, t5 und t6 bezeichnet. Die Zeitabschnitte 62, 63, 64, 65, 66 und 67 des Zeitintervalls 70 können jeweils aus einer Differenz der Zeitpunkte t1, t2, t3, t4 beziehungsweise t5 gerechnet vom Startzeitpunkt t0 gebildet werden. Ein Zeitpunkt 71 entspricht dem Erfassungszeitpunkt, an dem der Strom Statorspule 7, also der Phase a erfasst worden ist. Ein Zeitpunkt 72 entspricht dem Erfassungszeitpunkt, an dem der Strom Statorspule 8, also der Phase b erfasst worden ist.

Der Erfassungszeitpunkt 71 wird von der Verarbeitungseinheit 12 in Figur 1 durch einen Zeitabschnitt 69 festgelegt, der einer Zeitdauer nach einem Start der Pulsweitenmodulationsperiode des Spannungsverlaufs 90 entspricht. Der Erfassungszeitpunkt 72 wird von der Verarbeitungseinheit 12 in Figur 1 durch einen Zeitabschnitt 68 festgelegt, der einer Zeitdauer nach einem Start der Pulsweitenmodulationsperiode des Spannungsverlaufs 91 entspricht.

Das Diagramm 61 zeigt eine Kurve 80, die einen Stromverlauf eines von der Verarbeitungseinheit 12 ermittelten Stromes durch die Statorspule 7 repräsentiert. Eine Gerade 81 repräsentiert den von der Verarbeitungseinheit 12 ermittelten zeitlichen Mittelwert des Stromverlaufes 80 innerhalb des Zeitintervalls 70.

Eine Kurve 82 repräsentiert einen Stromverlauf eines von der Verarbeitungseinheit 12 ermittelten Stromes durch die Statorspule 8. Der Stromverlauf ist in Abhängigkeit des zum Erfassungszeitpunkt 72 erfassten Stromwertes des Stromes durch die Statorspule 8 ermittelt worden. Eine Gerade 83 repräsentiert den von der Verarbeitungseinheit 12 ermittelten zeitlichen Mittelwert des Stromverlaufes 82 innerhalb des Zeitintervalls 70.

Eine Kurve 84 repräsentiert einen Stromverlauf eines von der Verarbeitungseinheit 12 ermittelten Stromes durch die Statorspule 9. Der Stromverlauf ist in Abhängigkeit des zum Erfassungszeitpunkt 71 erfassten Stromwertes des Stromes durch die Statorspule 9 ermittelt worden. Eine Gerade 85 repräsentiert den von der Verarbeitungseinheit 12 ermittelten zeitlichen Mittelwert des Stromverlaufes 84 innerhalb des Zeitintervalls 70.

## Patentansprüche

1. Elektronisch kommutierter Elektromotor (1), mit einem Stator (3) und einem insbesondere permanentmagnetisch ausgebildeten Rotor (5), wobei der Elektromotor (1) eine mit einer Leistungsendstufe (10) des Elektromotors (1) verbundene Verarbeitungseinheit (12) aufweist, wobei die Verarbeitungseinheit (12) ausgebildet ist, die Leistungsendstufe (10) zum Erzeugen wenigstens eines Statorstromes anzusteuern, wobei die Leistungsendstufe (10) ausgangsseitig mit dem Stator (3) verbunden ist, und der Elektromotor (1) einen mit der Verarbeitungseinheit verbundenen Stromsensor (20) aufweist, welcher ausgebildet ist, den von der Leistungsendstufe (10) erzeugten Statorstrom (80, 71) zu erfassen und ein den Statorstrom (80, 71) repräsentierendes Stromsignal zu erzeugen, **dadurch gekennzeichnet, daß** die Verarbeitungseinheit (12) ausgebildet ist, mittels des Stromsensors (20) wenigstens einen Stromwert des Stromes zu einem Erfassungszeitpunkt (71, 72) innerhalb eines Zeitintervalls (70), zu erfassen und wenigstens in Abhängigkeit von dem Stromwert und in Abhängigkeit einer von der Leistungsendstufe (10) auf den Stator (3) geschalteten Spannung (90, 91, 92), und einer Impedanz umfassend eine Induktivität oder einen ohmschen Widerstand (50, 51, 52) von Statorspulen des Stators (3), einen Stromverlauf (80, 82, 84) des Stromes in dem Zeitintervall (70) zu ermitteln und die Leistungsendstufe (10) zum Bestromen des Stators in Abhängigkeit des ermittelten Stromverlaufes (80, 82, 84) anzusteuern.

2. Elektromotor (1) nach Anspruch 1, **dadurch gekennzeichnet, dass** das Zeitintervall (70) eine Pulsweitenmodulations-Periode ist, wobei die Verarbeitungseinheit ausgebildet ist, die Leistungsendstufe (10), zum Bestromen des Stators (3) und so zum Erzeugen eines magnetischen Drehfeldes zum Drehbewegen des Rotors (5) pulsweitenmoduliert anzusteuern und dazu ein pulsweitenmoduliertes Steuersignal (38) zu erzeugen.

3. Elektromotor (1) nach Anspruch 1 oder 2, **dadurch gekennzeichnet, dass** die Verarbeitungseinheit (12) ausgebildet ist, aus dem Stromverlauf einen Mittelwert (81, 83, 85) des Stromes in dem Zeitintervall (70) aus während Zeitabschnitten (62, 63, 64, 65, 66, 67) des Zeitintervalls (70) ermittelten Strömen zu bilden und die Leistungsendstufe (10) in Abhängigkeit des Mittelwerts (81, 83, 85) anzusteuern, wobei eine von der Leistungsendstufe (10) auf den Stator (3) geschaltete Spannung (90, 91, 92) während des Zeitabschnitts (62, 63, 64, 65, 66, 67) konstant ist.

4. Elektromotor (1) nach Anspruch 1, **dadurch gekennzeichnet, dass** die Verarbeitungseinheit (12) ausgebildet ist, eine während eines Zeitabschnitts (62, 63, 64, 65, 66, 67) fließende elektrische Ladung zu ermitteln und den Mittelwert (81, 83, 85) des Stromes in Abhängigkeit einer Summe der während der Zeitabschnitte (62, 63, 64, 65, 66, 67) in dem Zeitintervall (70) fließenden elektrischen Ladungen zu ermitteln.

5. Elektromotor (1) nach einem der vorhergehenden Ansprüche 2 bis 4, **dadurch gekennzeichnet, dass** die Anzahl der Zeitabschnitte (62, 63, 64, 65, 66, 67) einer Anzahl von möglichen zueinander verschiedenen Schaltzuständen einer auf die Statorspulen (7, 8, 9) des Stators (3) geschalteten Spannung (90, 91, 92) entspricht.

6. Elektromotor (1) nach einem der vorhergehenden Ansprüche, **dadurch gekennzeichnet, dass** die auf die Statorspulen (7, 8, 9) des Stators (3) geschaltete Spannung (90, 91, 92) eine Zwischenkreisspannung ist.

7. Elektromotor (1) nach einem der vorhergehenden Ansprüche, **dadurch gekennzeichnet, dass** der Elektromotor (1) einen mit der Verarbeitungseinheit (12) verbundenen Temperatursensor (14, 15) aufweist, welcher ausgebildet ist, eine Temperatur wenigstens eines Teils des Elektromotors (1), insbesondere des Stators (3) und/oder der Leistungsendstufe (10) zu erfassen und ein die Temperatur repräsentierendes Temperatursignal (37) zu erzeugen und die Verarbeitungseinheit (12) ausgebildet ist, den Stromwert zum Ermitteln des Stromverlaufes (80, 82, 84) in Abhängigkeit des Temperatursignals (37), insbesondere einer eine Temperaturänderung repräsentierende Änderung des Temperatursignals (37) zu erfassen.

8. Elektromotor (1) nach einem der vorhergehenden Ansprüche,

**dadurch gekennzeichnet, dass** der Stromsensor (20) durch einen Widerstand, insbesondere Shunt-Widerstand gebildet ist, welcher mit der Leistungsendstufe (10) insbesondere seriell verbunden ist.

9. Verfahren zum Betreiben eines elektronisch kommutierten Elektromotors, bei dem Statorspulen eines Elektromotors zum Erzeugen eines magnetischen Drehfeldes pulsweitenmoduliert mit einer Spannung beschaltet werden, **dadurch gekennzeichnet, dass** ein Stromwert eines durch die Statorspulen fließenden Stromes zu einem Erfassungszeitpunkt (71, 72) in einem Zeitintervall (70) erfasst wird und ein Stromverlauf (80, 82, 84) des Stromes in dem Zeitintervall (70) in Abhängigkeit des Stromwertes und der auf den Stator (3) geschalteten Spannung (90, 91, 92), und einer Impedanz umfassend eine Induktivität oder zusätzlich einen ohmschen Widerstand von Statorspulen des Stators (3) ermittelt wird und die Statorspulen in Abhängigkeit des ermittelten Stromverlaufes (80, 82, 84) beschaltet werden.

10. Verfahren nach Anspruch 9, bei dem aus dem Stromverlauf (80, 82, 84) ein Mittelwert (81, 83, 85) des Stromes in dem Zeitintervall (70) aus während Zeitabschnitten (62, 63, 64, 65, 66, 67) des Zeitintervalls (70) ermittelten Strömen gebildet wird und die Statorspulen in Abhängigkeit des Mittelwerts angesteuert werden, wobei Schaltzustände der Statorspulen (7, 8, 9) während des Zeitabschnitts (62, 63, 64, 65, 66, 67) jeweils unverändert sind.

11. Verfahren nach Anspruch 9 oder 10, bei dem eine während eines Zeitabschnitts (62, 63, 64, 65, 66, 67) fließende elektrische Ladung zu ermittelt wird und der Mittelwert des Stromes in Abhängigkeit einer Summe der während der Zeitabschnitte (62, 63, 64, 65, 66, 67) in dem Zeitintervall (70) fließenden Ladungen ermittelt wird.

12. Verfahren nach einem der Ansprüche 9 bis 11, bei dem eine Temperatur wenigstens eines Teils des Elektromotors erfasst wird und ein die Temperatur repräsentierendes Temperatursignal (37) erzeugt wird und der Stromwert zum Ermitteln des Stromverlaufes (80, 82, 84) in Abhängigkeit des Temperatursignals (37), insbesondere einer eine Temperaturänderung repräsentierende Änderung des Temperatursignals (37) erfasst wird.


**Claims**

1. Electronically commutated electric motor (1),
   having a stator (3) and a rotor (5), which is designed in particular with a permanent magnet, wherein the electric motor (1) has a processing unit (12) connected to a power output stage (10) of the electric motor (1), wherein the processing unit (12) is designed to drive the power output stage (10) to generate at least one stator current, wherein the power output stage (10) has its output side connected to the stator (3), and the electric motor (1) has a current sensor (20) connected to the processing unit, said current sensor being designed to detect the stator current (80, 71) generated by the power output stage (10) and to generate a current signal representing the stator current (80, 71), **characterized in that** the processing unit (12) is designed to detect, by means of the current sensor (20), at least one current value of the current at a detection instant (71, 72) within a time interval (70) and to determine a current profile (80, 82, 84) of the current in the time interval (70), at least on the basis of the current value and on the basis of a voltage (90, 91, 92), connected from the power output stage (10) to the stator (3), and an impedance comprising on inductance or a non-reactive resistance (50, 51, 52) of stator coils of the stator (3), and to drive the power output stage (10) to energize the stator on the basis of the determined current profile (80, 82, 84).

2. Electric motor (1) according to Claim 1, **characterized in that** the time interval (70) is a pulse-width-modulation period, wherein the processing unit is designed to drive the power output stage (10), for the purpose of energizing the stator (3) and thus for the purpose of generating a rotating magnetic field for the rotary movement of the rotor (5), in a pulse-width-modulated manner and, to that end, to generate a pulse-width-modulated control signal (38).

3. Electric motor (1) according to Claim 1 or 2,
   **characterized in that**
   the processing unit (12) is designed to form, from the current profile, an average value (81, 83, 85) of the current in the time interval (70) composed of currents determined during time periods (62, 63, 64, 65, 66, 67) of the time interval (70) and to drive the power output stage (10) on the basis of the average value (81, 83, 85), wherein a voltage (90, 91, 92) connected from the power output stage (10) to the stator (3) is constant during the time period (62, 63, 64, 65, 66, 67).

4. Electric motor (1) according to Claim 1,
   **characterized in that**

the processing unit (12) is designed to determine an electric charge flowing during a time period (62, 63, 64, 65, 66, 67) and to determine the average value (81, 83, 85) of the current on the basis of a sum of the electric charges flowing during the time periods (62, 63, 64, 65, 66, 67) in the time interval (70).

5. Electric motor (1) according to one of the preceding Claims 2 to 4,
   **characterized in that**
   the number of time periods (62, 63, 64, 65, 66, 67) corresponds to a number of possible switching states, which are different from one another, of a voltage (90, 91, 92) connected to the stator coils (7, 8, 9) of the stator (3).

6. Electric motor (1) according to one of the preceding claims, **characterized in that** the voltage (90, 91, 92) connected to the stator coils (7, 8, 9) of the stator (3) is a DC-Link voltage.

7. Electric motor (1) according to one of the preceding claims,
   **characterized in that**
   the electric motor (1) has a temperature sensor (14, 15) connected to the processing unit (12), said temperature sensor being designed to detect a temperature of at least one part of the electric motor (1), in particular the stator (3) and/or the power output stage (10), and to generate a temperature signal (37) representing the temperature, and the processing unit (12) is designed to detect the current value for determining the current profile (80, 82, 84) on the basis of the temperature signal (37), in particular of a change in the temperature signal (37) representing a change in temperature.

8. Electric motor (1) according to one of the preceding claims,
   **characterized in that**
   the current sensor (20) is formed by a resistor, in particular a shunt resistor, which is connected, in particular, in series with the power output stage (10).

9. Method for operating an electronically commutated electric motor, in which stator coils of an electric motor for generating a rotating magnetic field are wired in a pulse-width-modulated manner to a voltage,
   **characterized in that**
   a current value of a current flowing through the stator coils at a detection instant (71, 72) in a time interval (70) is detected and a current profile (80, 82, 84) of the current in the time interval (70) is determined on the basis of the current value and the voltage (90, 91, 92) connected to the stator (3), and an impedance comprising an inductance or additionally a non-reactive resistance of stator coils of the stator (3), and the stator coils are wired on the basis of the determined current profile (80, 82, 84).

10. Method according to Claim 9,
    in which an average value (81, 83, 85) of the current in the time interval (70) composed of currents determined during time periods (62, 63, 64, 65, 66, 67) of the time interval (70) is formed from the current profile (80, 82, 84) and the stator coils are driven on the basis of the average value, wherein switching states of the stator coils (7, 8, 9) during the time period (62, 63, 64, 65, 66, 67) are unchanged in each case.

11. Method according to Claim 9 or 10,
    in which an electric charge flowing during a time period (62, 63, 64, 65, 66, 67) to is determined and the average value of the current is determined on the basis of a sum of the charges flowing during the time periods (62, 63, 64, 65, 66, 67) in the time interval (70).

12. Method according to one of Claims 9 to 11
    in which a temperature of at least one part of the electric motor is detected and a temperature signal (37) representing the temperature is generated, and the current value for determining the current profile (80, 82, 84) on the basis of the temperature signal (37), in particular of a change in the temperature signal (37) representing a change in temperature, is detected.

**Revendications**

1. Moteur électrique à commutation électronique (1), comprenant un stator (3) et un rotor (5) notamment magnétique permanent, le moteur électrique (1) comportant une unité de traitement (12) connectée à un étage de sortie de puissance (10) du moteur électrique (1), l'unité de traitement (12) étant conçue pour commander l'étage de sortie de puissance (10) afin de générer au moins un courant de stator, l'étage de sortie de puissance (10) étant relié en sortie au stator (3) et le moteur électrique (1) comportant un capteur de courant (20) qui est relié à l'unité de traitement et qui est conçu pour détecter le courant de stator (80, 71) généré par l'étage de sortie de puissance (10) et pour générer un signal de courant représentant le courant de stator (80, 71),

**caractérisé en ce que** l'unité de traitement (12) est conçu pour détecter, au moyen du capteur de courant (20), au moins une valeur du courant à un instant de détection (71, 72) dans un intervalle de temps (70) et pour déterminer un profil de courant (80, 82, 84) du courant dans l'intervalle de temps (70) au moins en fonction de la valeur de courant et en fonction d'une tension (90, 91, 92), appliquée au stator (3) par l'étage de sortie de puissance (10), et d'une impédance ayant une inductance ou une résistance ohmique (50, 51, 52) de bobines du stator (3) et pour commander l'étage de sortie de puissance (10) destiné à alimenter en courant le stator en fonction du profil de courant de courant déterminé (80, 82, 84).

2.  Moteur électrique (1) selon la revendication 1, **caractérisé en ce que** l'intervalle de temps (70) est une période de modulation de largeur d'impulsion, l'unité de traitement étant conçue pour commander, en modulation de largeur d'impulsion, l'étage de sortie de puissance (10) destiné à alimenter le stator (3) et ainsi à générer un champ magnétique rotatif destiné à faire tourner le rotor (5) et générer un signal de commande modulé en largeur (38).

3.  Moteur électrique (1) selon la revendication 1 ou 2, **caractérisé en ce que** l'unité de traitement (12) est conçue pour former à partir du profil de courant une valeur moyenne (81, 83, 85) du courant dans l'intervalle de temps (70) parmi des courants déterminés pendant des parties (62, 63, 64, 65, 66, 67) de l'intervalle de temps (70) et pour commander l'étage de sortie de puissance (10) en fonction de la valeur moyenne (81, 83, 85), une tension (90, 91, 92) appliquée au stator (3) par l'étage de sortie de puissance (10) étant constante pendant la partie (62, 63, 64, 65, 66, 67) de l'intervalle de temps.

4.  Moteur électrique (1) selon la revendication 1, **caractérisé en ce que** l'unité de traitement (12) est conçue pour déterminer une charge électrique circulant pendant une partie (62, 63, 64, 65, 66, 67) de l'intervalle de temps et pour déterminer la valeur moyenne (81, 83, 85) du courant en fonction d'une somme des charges électriques circulant pendant les parties (62, 63, 64, 65, 66, 67) de l'intervalle de temps (70).

5.  Moteur électrique (1) selon l'une des revendications précédentes 2 à 4, **caractérisé en ce que** le nombre de parties (62, 63, 64, 65, 66, 67) correspondent à un nombre d'états de commutation possibles, différents les uns des autres, d'une tension (90, 91, 92) appliquée sur les bobines (7, 8, 9) du stator (3).

6.  Moteur électrique (1) selon l'une des revendications précédentes, **caractérisé en ce que** la tension de commutation (90, 91, 92), appliquée sur les bobines (7, 8, 9) du stator (3), est une tension de circuit intermédiaire.

7.  Moteur électrique (1) selon l'une des revendications précédentes, **caractérisé en ce que** le moteur électrique (1) comporte un capteur de température (14, 15) qui est relié à l'unité de traitement (12) et qui est conçu pour détecter une température d'au moins une partie du moteur électrique (1), en particulier du stator (3) et/ou de l'étage de sortie de puissance (10), et pour générer un signal de température (37) représentant la température et l'unité de traitement (12) est conçue pour détecter la valeur de courant destinée à déterminer le profil de courant (80, 82, 84) en fonction du signal de température (37), en particulier d'une variation du signal de température (37) représentant une variation de température.

8.  Moteur électrique (1) selon l'une des revendications précédentes, **caractérisé en ce que** le capteur de courant (20) est formé par une résistance, en particulier une résistance de shunt qui est reliée, notamment en série, à l'étage de sortie de puissance (10).

9.  Procédé de fonctionnement d'un moteur électrique à commutation électronique, une tension étant appliquée avec une modulation de largeur d'impulsion sur des bobines de stator d'un moteur électrique pour générer un champ magnétique tournant, **caractérisé en ce qu'**une valeur d'un courant circulant dans les bobines de stator est détectée à un temps de détection (71, 72) dans un intervalle de temps (70) et **en ce qu'**un profil de courant (80, 82, 84) du courant dans l'intervalle de temps (70) est déterminée en fonction de la valeur de courant et de la tension (90, 91, 92) appliquée au stator (3), ainsi que d'une impédance comprenant une inductance ou en plus une résistance ohmique des bobines du stator (3) et **en ce que** les bobines de stator sont connectées en fonction du profil de courant déterminé (80, 82, 84).

10. Procédé selon la revendication 9, une valeur moyenne (81, 83, 85) du courant dans l'intervalle de temps (70), parmi des courants déterminés pendant des parties (62, 63, 64, 65, 66, 67) de l'intervalle de temps (70), étant déterminée à partir du profil de courant (80, 82, 84) et les bobines de stator étant commandées en fonction de la valeur moyenne, les états de commutation des bobines de stator (7, 8, 9) sont inchangés pendant la partie (62, 63, 64, 65, 66, 67) de l'intervalle de temps.

11. Procédé selon la revendication 9 ou 10, une charge électrique circulant pendant une partie (62, 63, 64, 65, 66, 67) de l'intervalle de temps à étant déterminée et la valeur moyenne du courant étant déterminée en fonction d'une somme des charges circulant pendant les parties (62, 63, 64, 65, 66, 67) de l'intervalle de temps (70).

12. Procédé selon l'une des revendications 9 à 11, une température d'au moins une partie du moteur électrique étant détectée et un signal de température (37), représentant la température, étant généré et la valeur de courant étant détectée pour déterminer le profil de courant (80, 82, 84) en fonction du signal de température (37), en particulier d'une variation du signal de température (37) représentant une variation de température.

**FIG. 1**

EP 2 754 237 B1

**FIG. 2**

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010001241